# FASCICULE DE BREVET EUROPEEN

(11) **EP 2 144 828 B1**
(45) Date de publication et mention de la délivrance du brevet: **05.09.2012**
(21) Numéro de dépôt: 08788082.9
(22) Date de dépôt: 28.03.2008
(51) Int. Cl.: B65G 15/62, B65G 21/20

(54) **STATION DE SUPPORT POUR CONVOYEUR À PATINS DE GUIDAGE**
LAGERUNGSSTATION FÜR EIN FÖRDERBAND MIT FÜHRUNGSBAHNEN
BEARING STATION FOR CONVEYOR WITH GUIDING SKIDS

(30) Priorité: 26.04.2007 FR 0754715
(43) Date de publication de la demande: 20.01.2010
(73) Titulaire: Brunone, René, 27950 Saint Marcel (FR)
(72) Inventeur: Brunone, René, 27950 Saint Marcel (FR)
(74) Mandataire: Domenego, Bertrand
(86) Numéro de dépôt international: PCT/FR2008/050556
(87) Numéro de publication internationale: WO 2008/142315

(56) Documents cités:
- EP-A- 1 174 370
- FR-A- 2 836 135
- FR-A- 2 860 219

## Description

La présente invention concerne une station de support pour un convoyeur à bande, du type comportant :
- un châssis, au moins un patin de glissement délimitant une surface d'appui de la bande, le ou chaque patin étant supporté par le châssis ;
- des moyens de fixation du ou chaque patin sur le châssis, Selon le préambule de la revendication 1, telle que divulguée dans le document FR-A-2836135.

Il est connu, pour le transport de matériaux en vrac, tels que des granulats ou des minerais, d'utiliser des convoyeurs comportant une bande refermée en boucle circulant sur des stations de support disposées successivement suivant le parcours de la bande.

Les stations de support comportent généralement un châssis métallique sur lequel sont prévus des rouleaux rotatifs de guidage de la bande, ces rouleaux étant disposés de manière à délimiter une forme en creux.

D'autres types de stations de support comportent, à la place des rouleaux, des patins fixes présentant une surface sur laquelle glisse la bande.

Ces patins comportent généralement une barre de support métallique sur laquelle est surmoulé un bloc de matériau plastique, tel que du polyéthylène, permettant le glissement de la bande. Le patin est monté sur le châssis de la station par engagement de la barre de support dans des ouvertures ménagées à cet effet. La barre est retenue par des goupilles ou d'autres moyens de fixation.

De telles stations de support sont d'un coût de fabrication relativement élevé.

L'invention a pour but de proposer une station de support d'un coût de fabrication réduit.

A cet effet, l'invention a pour objet une station de support du type précité, caractérisée en ce que les moyens de fixation comportent un guide solidaire du patin, une clavette engagée dans le guide et coopérant avec le châssis pour immobiliser le patin suivant au moins une direction et une goupille engagée sur le guide et coopérant avec la clavette pour arrêter la clavette suivant la longueur du guide dans au moins un sens. selon revendication 1,

Suivant des modes particuliers de réalisation, la station de support comporte l'une ou plusieurs des caractéristiques suivantes :
- la goupille forme une butée d'arrêt de la clavette immobilisée dans le guide ;
- le guide comprend une rainure longitudinale ménagée sur une face du patin ;
- la rainure présente, en section, une forme en queue d'aronde ;
- la goupille est formée d'une épingle déformable élastiquement ;
- la goupille présente deux branches articulées présentant deux plages en saillie formant des zones de préhension ;
- la goupille comporte des crochets d'ancrage, et le guide comporte des logements de réception des crochets d'ancrage de la goupille ;
- la clavette comporte un corps de guidage dans le guide et un bec d'accrochage en saillie ;
- le bec d'accrochage de la clavette présente une forme de crosse ;
- le châssis comporte des encoches disposées de part et d'autre du patin, et une clavette fait saillie axialement de part et d'autre de chaque patin, ces clavettes étant reçues dans les encoches ;
- la station de support comporte plusieurs patins disposés côte à côte en délimitant une auge ;
- les patins sont allongés et sont disposés perpendiculairement au plan de l'auge ;
- les patins sont disposés dans le plan de l'auge ;
- les clavettes sont disposées aux extrémités du patin et les goupilles sont disposées entre les deux clavettes ;
- pour au moins un patin, les goupilles sont disposées aux extrémités des patins et les clavettes sont disposées entre les goupilles ;
- le châssis comporte au moins une lumière dans laquelle est reçue une clavette ;
- la station de support comporte pour chaque patin une semelle de support du patin, la semelle et le patin comportant longitudinalement un guide de même forme, la semelle comportant en outre un profil complémentaire permettant, par complémentarité de formes, l'engagement du patin sur la semelle ; et
- le patin comporte des tronçons disjoints successifs suivant la longueur de la semelle de support.

L'invention a également pour objet un convoyeur à bande comportant plusieurs stations de support telles que définies ci-dessus et dont l'ensemble des patins peuvent présenter en outre des guides identiques et être retenus par des clavettes et des goupilles toutes identiques selon revendication 19.

L'invention sera mieux comprise à la lecture de la description qui va suivre, donnée uniquement à titre d'exemple et faite en se référant aux dessins, sur lesquels :
- la figure 1 est une vue en perspective d'une station de support selon l'invention vue de dessous ;
- la figure 2 est une vue de face du châssis de la figure 1 ;
- la figure 3 est une vue en perspective agrandie d'un demi-patin de la station de support de la figure 1 ;
- la figure 4 est une vue en perspective d'une station de réception d'objets à transporter par le convoyeur comportant une station de support selon l'invention ;
- les figures 5 et 6 sont des vues respectivement en bout et en perspective de dessous de la station de la figure 4 ;
- la figure 7 est une vue de détail d'un agrandissement de la liaison d'un patin de la station des figures 4 à 6 ;
- la figure 8 est une vue en coupe longitudinale de la station des figures 4 à 7 ;
- la figure 9 est une vue identique à celle de la figure 5 d'une variante de réalisation d'une station selon l'invention ;
- les figures 10 et 11 sont des vues respectivement en perspective de dessus et en bout d'une autre variante de réalisation de la station des figures 4 à 8 ;
- la figure 12 est une vue en perspective de trois-quarts inférieurs du détail agrandi de la liaison d'un patin de la station de la figure 11 ; et
- la figure 13 est une vue identique à celle des figures 5, 9 et 11 d'encore une autre variante de réalisation d'une station selon l'invention.

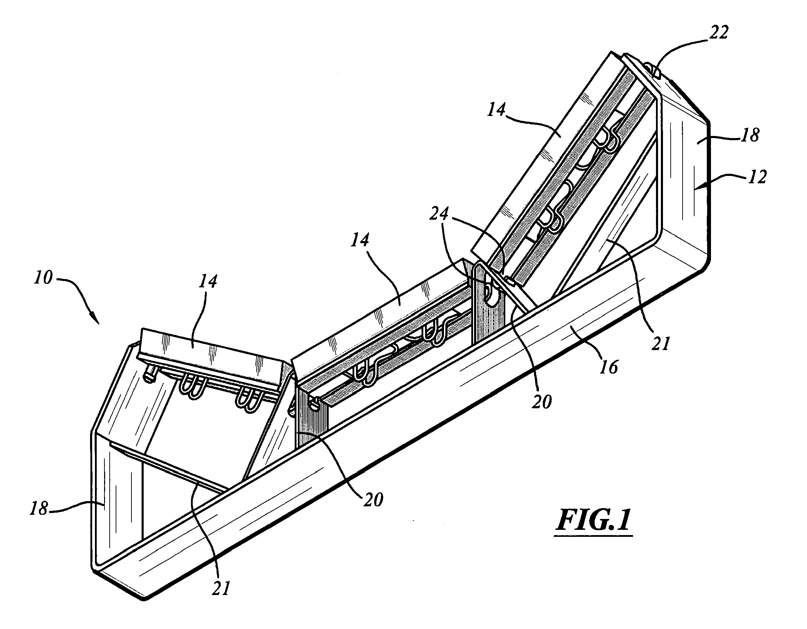

La station de support 10 illustrée sur la figure 1 est destinée au support et au guidage d'un brin de support d'une bande d'un convoyeur refermée en boucle non représentée. La station de support 10 est portée par un châssis métallique 12, avec des pieds (non représentés) délimitant un passage pour un brin de retour de la bande.

La station de support 10 comporte, outre le châssis métallique 12, trois patins identiques 14 disposés côte à côte transversalement au sens de circulation de la bande. Ils délimitent ensemble une forme d'auge, le patin médian délimitant un fond et les deux autres patins latéraux étant inclinés vers le patin médian.

Les patins sont allongés et sont disposés dans le prolongement les uns des autres avec leur longueur s'étendant perpendiculairement à la direction d'avancement de la bande.

Le châssis 12 est formé d'un unique berceau plan. Il comporte une embase plane 16 prolongée à chaque extrémité par des bras de support 18 généralement verticaux propres à supporter une extrémité des patins latéraux 14. En outre, le châssis 12 comporte des pontets 20 de support des deux extrémités du patin médian et des extrémités inférieures des patins latéraux. Ces pontets 20 sont formés d'un fer plat replié sur lui-même et soudé sur l'embase 16. En outre, des goussets 21 de rigidification sont soudés entre l'embase 16 et les bras 18 pour éviter leur écartement.

Les pontets 20 délimitent ainsi deux plats reliés par un coude.

Des encoches débouchantes 22 sont ménagées à l'extrémité des bras de support 18. De même, des encoches 24 sont formées dans les deux plats des pontets 20.

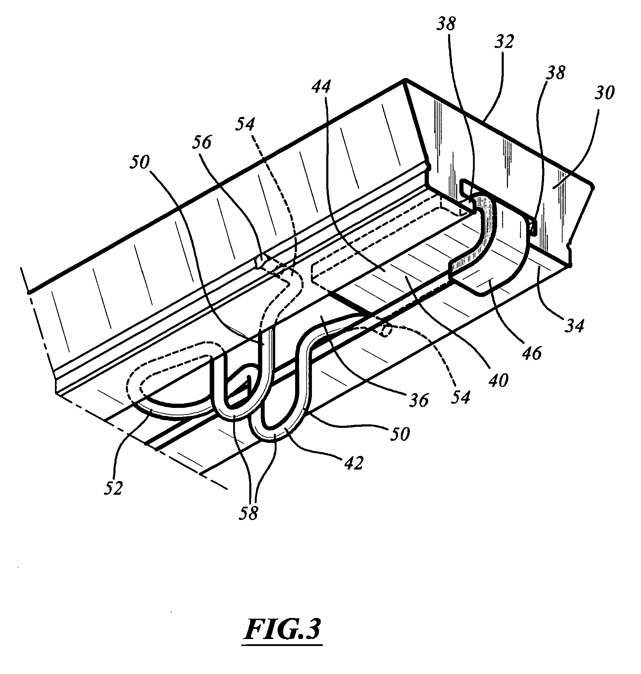

Comme illustré à plus grande échelle sur la figure 3, les patins 14 sont constitués d'un profilé 30 de matériau plastique tel que du polyéthylène. Ces profilés présentent une section de forme générale trapézoïdale. Ils présentent une surface 32 d'appui de la bande constituée par la plus grande base de la section trapézoïdale.

Les flancs du profilé convergent vers la petite base notée 34, laquelle est percée de part en part par une rainure longitudinale 36 débouchant à ses deux extrémités. Cette rainure 36 présente, de préférence, une forme en queue d'aronde. Plus précisément, dans le mode de réalisation représenté, celle-ci présente une forme de T, de sorte que la rainure 36 est refermée au niveau de son ouverture longitudinale par deux ailes 38 limitant son ouverture.

A chaque extrémité, les patins 14 comportent des moyens de fixation sur le châssis 12. Ces moyens de fixation comportent, pour chaque extrémité du patin, une clavette 40 et une goupille 42 toutes deux engagées dans la rainure 36.

La clavette 40 présente un corps 44 prolongé par un bec en saillie 46. Le corps 44 est constitué d'une plaque rectangulaire dont la largeur correspond à la plus grande largeur de la rainure 36, cette largeur étant inférieure à la distance séparant les bords opposés des deux ailes 38. La longueur de la plaque formant le corps 44 est supérieure à sa largeur permettant un guidage à coulissement satisfaisant du corps 44 dans la rainure 36.

Le bec 46 prolonge longitudinalement le corps 44. Ce bec est disposé axialement et présente une forme de crosse. Le bec 46 est ainsi constitué d'une languette recourbée sur elle-même. Il est constitué d'un tronçon de largeur moindre de celle du corps 44. Cette largeur est en particulier inférieure à la distance séparant les deux bords opposés des ailes 38.

De préférence, la clavette 40 est formée d'une plaque métallique mise en forme par découpage, le bec 46 étant obtenu par pliage.

La clavette 40 est propre à coopérer avec le châssis pour assurer une immobilisation du patin suivant au moins une direction, notamment par engagement du bec 46 dans une échancrure ou une lumière du châssis.

La goupille 42 est propre à être reçue dans la rainure 36 et à immobiliser la clavette 40 suivant la longueur de la rainure dans au moins un sens. Dans le mode de réalisation illustré, la goupille 42 est formée d'un fil conformé pour constituer une épingle présentant généralement la forme d'une boucle ouverte symétrique élastiquement déformable.

Plus précisément, la goupille 42 présente deux branches 50 reliées l'une à l'autre par un rebroussement 52. Ces deux branches présentent à leurs extrémités des ergots 54 faisant saillie vers l'extérieur et orientés de manière coaxiale en étant opposés l'un à l'autre. Ces ergots sont propres à être reçus dans des logements complémentaires 56 ménagés dans les parois latérales de la rainure 36.

En outre, chaque branche 50 comporte une saillie 58 constituée par un lobe délimité par le fil et s'étendant dans un plan généralement perpendiculaire au plan général de l'aiguille délimités par les ergots 54 et le rebroussement 52.

Les lobes 58 forment des surfaces d'actionnement de l'épingle permettant par pression l'une vers l'autre de rapprocher les deux ergots 54 grâce à la déformation élastique de la goupille au niveau du rebroussement 52.

La clavette 40 peut être engagée facilement dans la rainure 36 depuis l'une des extrémités de celle-ci par coulissement dans la partie élargie de la rainure. De même, la goupille 42 peut être également facilement introduite dans la rainure en resserrant les deux lobes de préhension 58, permettant un rapprochement des ergots 54 et un resserrement du rebroussement 52.

L'engagement des ergots 54 dans les logements 56 et le maintien du rebroussement 52 dans la rainure permettent une immobilisation de la goupille 42 par rapport au profilé 32. Ainsi, la goupille 42 constitue une butée d'arrêt de la clavette 40.

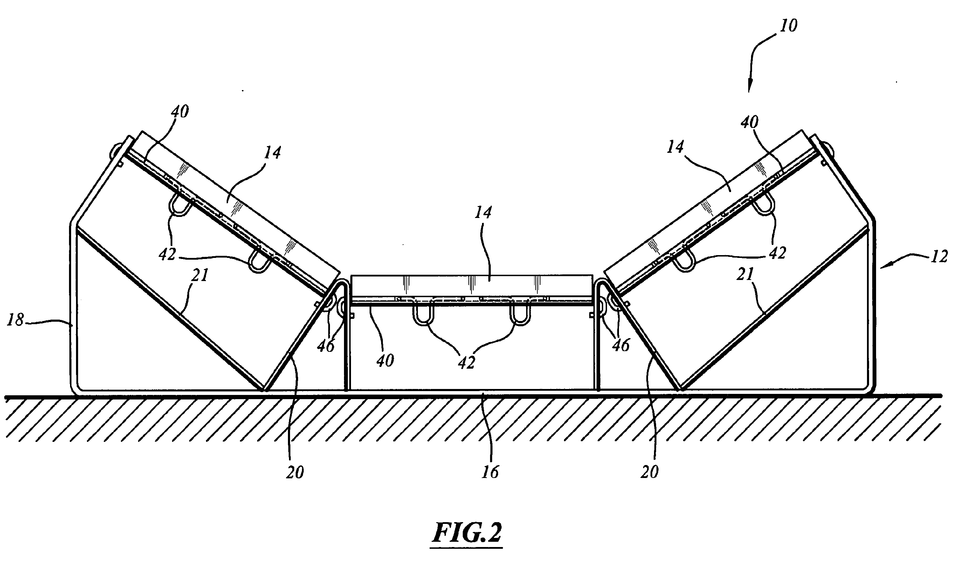

Les goupilles 42 sont disposées à distance des extrémités du profilé alors que les clavettes 40 sont engagées au voisinage des extrémités, de sorte que le bec 46 fait saillie longitudinalement au-delà des extrémités du profilé 32. Ainsi, et comme illustré sur les figures 1 et 2, les becs des clavettes sont reçus dans les encoches 22 et 24, assurant ainsi une retenue des patins sur le châssis.

On conçoit que les patins 14 peuvent être mis en place et retirés facilement, ceux-ci étant seulement portés par le châssis et maintenus en position par engagement des becs 46 en saillie dans les encoches 22 et 24. De plus, la fabrication des patins est très aisée, ceux-ci ne nécessitant qu'un tronçon de profilé 32, deux goupilles 42 et deux clavettes 40.

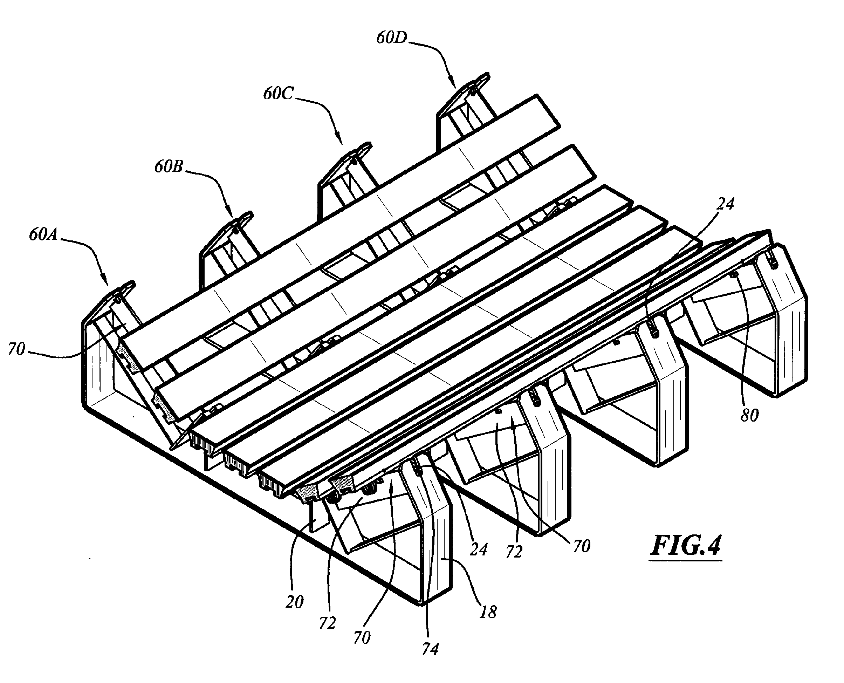

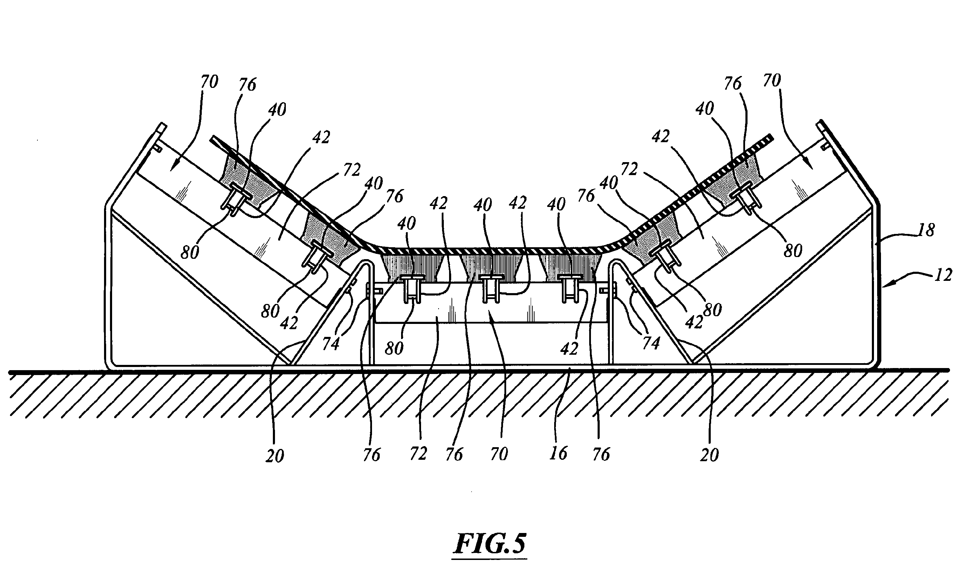

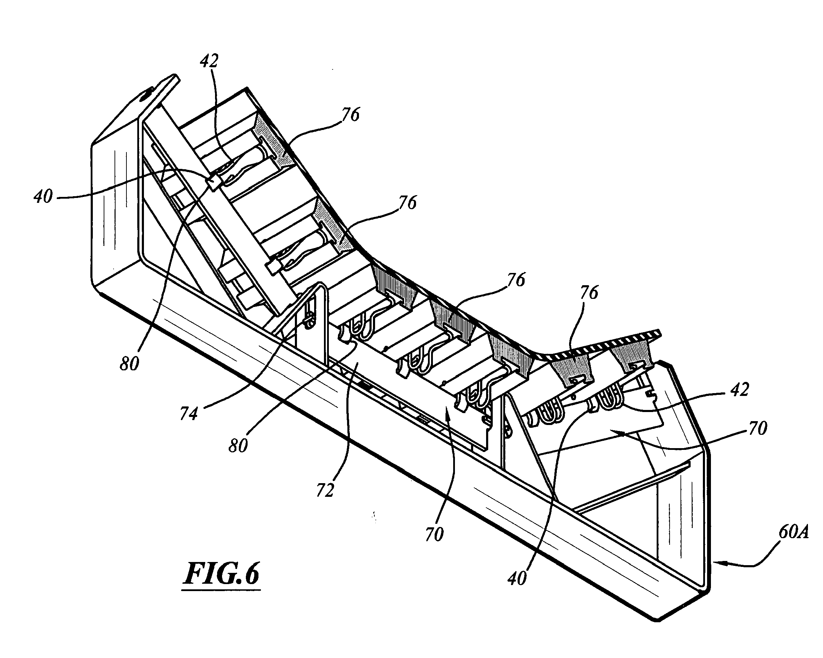

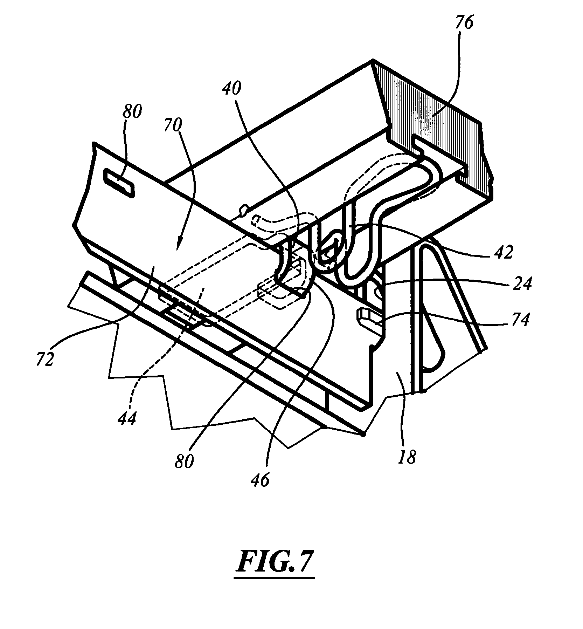

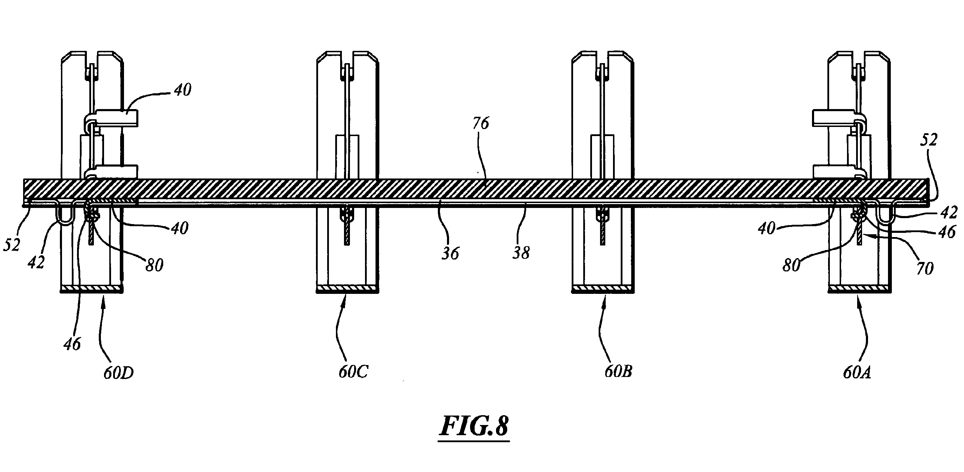

Sur les figures 4, 5, 6, 7 et 8 est représentée une station de support d'une bande particulière, cette station étant destinée à être utilisée dans la région de chargement du convoyeur.

Cette station, comme la précédente, est réalisée à partir de patins constitués d'un profilé, ces patins étant retenus sur le châssis 12 par des clavettes 40 et des goupilles 42 telles que celles décrites en regard de la figure 3.

Dans cette station, le châssis comporte quatre berceaux 60A, 60B, 60C, 60D chacun identique au berceau illustré sur la figure 1. Ces berceaux s'étendent parallèlement les uns aux autres et se succèdent suivant le sens de circulation de la bande.

Ces berceaux comportent en outre des traverses métalliques 70 disposées entre les encoches 22 et 24. Ces traverses sont formées d'une barre métallique 72 présentant deux saillies d'extrémité 74 engagées dans les encoches 22 et 24. Ces traverses 70 sont adaptées pour le support d'un ou plusieurs patins 76 tous identiques disposés longitudinalement par rapport au sens de circulation de la bande et s'étendant successivement sur les quatre berceaux.

Ainsi, au moins un patin, trois dans l'exemple illustré, est disposé horizontalement en position médiane sur les traverses 70 maintenues par les plots 18. En outre, de part et d'autre, deux paires de patins latéraux sont supportées par les traverses latérales maintenues entre un pontet 20 et un bras latéral 18.

Comme précédemment, les patins sont constitués de tronçons du même profilé que celui décrit en regard des figures 1 à 3. Toutefois, les tronçons utilisés présentent une longueur supérieure à celle des patins 14, cette longueur étant par exemple comprise entre 1 et 3 m, et pouvant aller jusqu'à 100 m voire plus.

Pour la retenue des patins, les traverses 70 sont chacune percées d'une lumière 80 disposée au droit de l'endroit d'installation d'un patin. Cette lumière reçoit l'extrémité recourbée du bec 46 d'une clavette 40, la clavette étant reçue dans la rainure 36 du patin. Une goupille 42 est engagée dans la rainure 36 depuis l'extrémité de chaque patin pour immobilier la clavette dans la rainure 36 et le bec 46 dans la lumière 80.

Ainsi, on conçoit que, grâce à deux clavettes 40 disposées aux extrémités et engagées dans les traverses 70 des berceaux d'extrémité et deux goupilles 42 retenant les clavettes 40 depuis les extrémités des patins, les patins peuvent être montés facilement sur les berceaux et immobilisés longitudinalement.

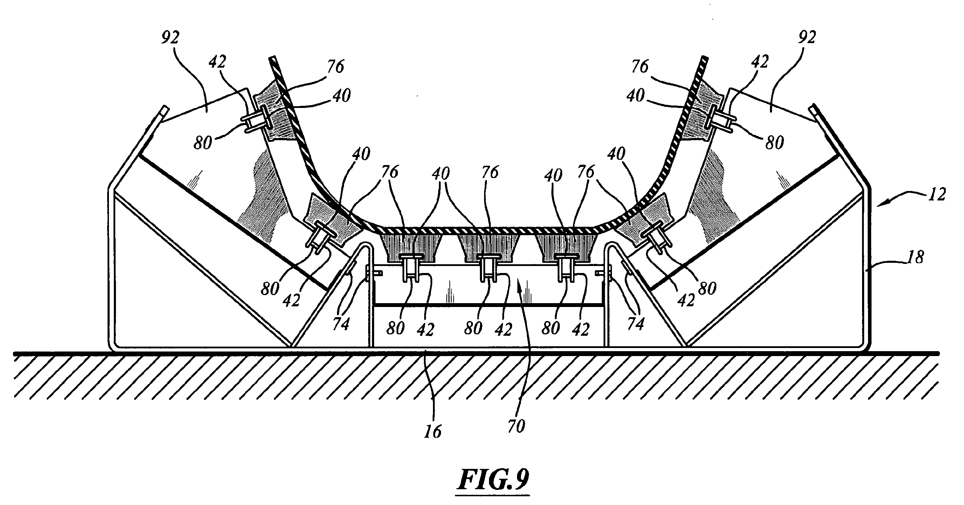

Sur la figure 9 est représentée une variante de réalisation du convoyeur dans laquelle la station de support dans la région de chargement présente une forme en auge profonde, c'est-à-dire que les flancs latéraux de la bande sont très relevés. A cet effet, les traverses 70 présentent une excroissance 92 assurant un relevage des patins latéraux extrêmes, ceux-ci étant disposés avec une inclinaison supérieure à celle des patins latéraux proches du fond.

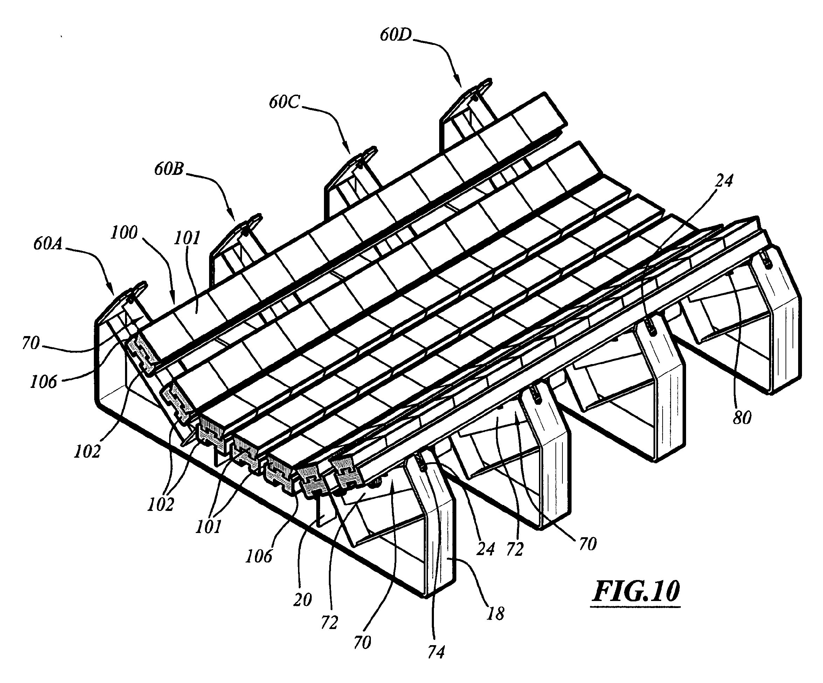

Les figures 10 à 13 illustrent une variante de réalisation de la station des figures 4 à 8. Dans ce mode de réalisation, la station comporte plusieurs ensembles de support 100, comprenant chacun un patin 101, une semelle 102 de support du patin et une enveloppe 106 continue de support de cette semelle 102. Le patin 101 est formée par une succession de tronçons disjoints d'un profilé de polyéthylène tel que décrit en regard de la figure 3.

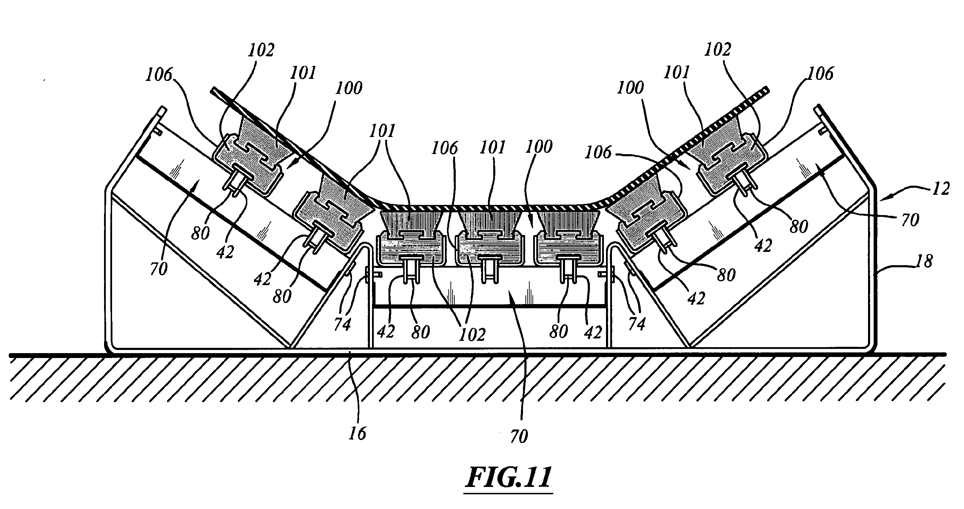

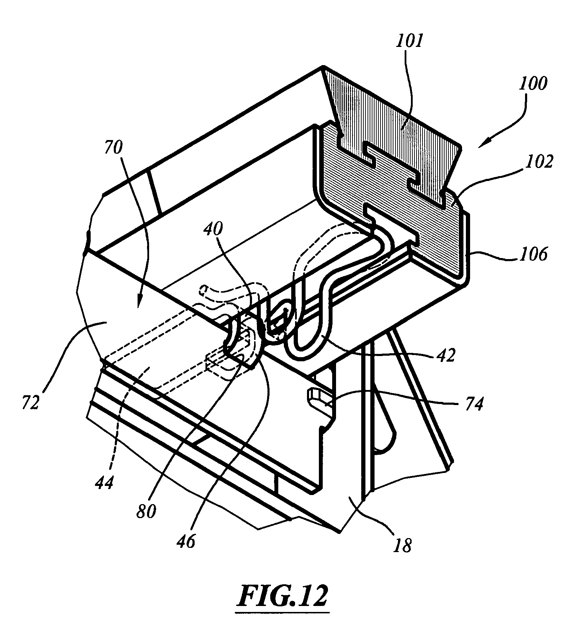

La semelle 102 est comme illustré sur les figures 11 et 12, une âme de polymère continue retenue dans l'enveloppe 106. L'enveloppe 106 est en forme de U. La semelle 102 présente sur sa face sur laquelle sont montés les tronçons du patin 101 une nervure présentant, en section, un profil complémentaire à celui du fond du patin 101. Ainsi, les tronçons du patin 101 sont engagés par complémentarité de forme sur la semelle de support.

Suivant sa face opposée, la semelle 102 présente une rainure identique à la rainure 36.

Les ensembles de support 100 sont solidarisées au châssis sur des traverses 70 grâce à des clavettes 40 engagées dans les rainures 36 et dont le bec est retenu dans une lumière des traverses. Les clavettes 40 sont, comme précédemment, retenues par des goupilles 42 engagées dans les rainures inférieures des semelles 102.

On conçoit que, dans ce mode de réalisation, les tronçons du patin 101 étant disjoints longitudinalement, ceux-ci peuvent se déformer indépendamment les uns des autres lors du chargement de la bande, permettant ainsi un guidage satisfaisant de la bande même lorsque la bande est soumise à des chocs violents. La semelle de support sur laquelle sont montés les tronçons du patin assure un amortissement satisfaisant des chocs lors du chargement du fait de sa structure élastique. De plus, les tronçons d patin peuvent être changés individuellement en cas d'usure.

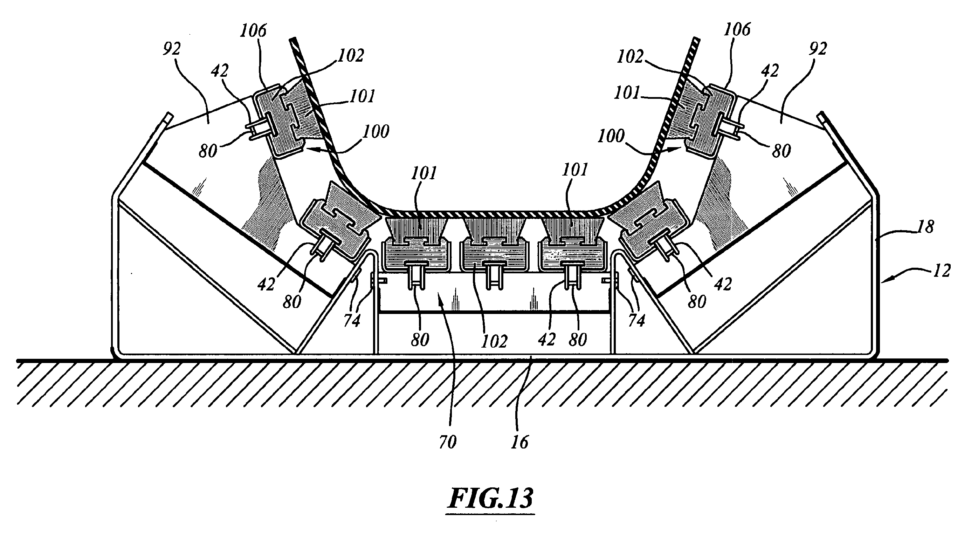

Sur la figure 13 est illustrée une variante de réalisation de la station des figures 10 à 12 dans laquelle les traverses 70 sont remplacées par les traverses avec une protubérance 92 permettant d'obtenir une forme en auge profonde.

## Revendications

1. Station de support (10) pour un convoyeur à bande comportant :
- un châssis (12), au moins un patin (14 ; 101) de glissement délimitant une surface d'appui de la bande, le ou chaque patin étant supporté par le châssis ;
- des moyens de fixation du ou chaque patin (14 ; 101) sur le châssis (12), **caractérisée en ce que** les moyens de fixation comportent un guide (36) solidaire du patin (14 ; 101), une clavette (40) engagée dans le guide (36) et coopérant avec le châssis (12) pour immobiliser le patin (14 ; 101) suivant au moins une direction et une goupille (42) engagée sur le guide (36) et coopérant avec la clavette (40) pour arrêter la clavette (40) suivant la longueur du guide (36) dans au moins un sens.

2. Station de support selon la revendication 1, **caractérisée en ce que** la goupille (42) forme une butée d'arrêt de la clavette (40) immobilisée dans le guide (36).

3. Station de support selon la revendication 1 ou 2, **caractérisée en ce que** le guide comprend une rainure longitudinale (36) ménagée sur une face du patin (14).

4. Station de support selon la revendication 3, **caractérisée en ce que** la rainure (36) présente, en section, une forme en queue d'aronde.

5. Station de support selon l'une quelconque des revendications précédentes, **caractérisée en ce que** la goupille (42) est formée d'une épingle déformable élastiquement.

6. Station de support selon la revendication 5, **caractérisée en ce que** la goupille présente deux branches articulées (50) présentant deux plages en saillie (58) formant des zones de préhension.

7. Station de support selon la revendication 5 ou 6, **caractérisée en ce que** la goupille (42) comporte des crochets d'ancrage (54), et le guide (36) comporte des logements (56) de réception des crochets d'ancrage (54) de la goupille.

8. Station de support selon l'une quelconque des revendications précédentes, **caractérisée en ce que** la clavette (40) comporte un corps (44) de guidage dans le guide et un bec (46) d'accrochage en saillie.

9. Station de support selon la revendication 8, **caractérisée en ce que** le bec d'accrochage (46) de la clavette (40) présente une forme de crosse.

10. Station de support **caractérisée en ce que** le châssis (12) comporte des encoches (22, 24) disposées de part et d'autre du patin (14), et **en ce qu'**une clavette (40) fait saillie axialement de part et d'autre de chaque patin (14), ces clavettes (40) étant reçues dans les encoches (22, 24).

11. Station de support selon l'une quelconque des revendications précédentes, **caractérisée en ce qu'**elle comporte plusieurs patins (14 ; 101) disposés côte à côte en délimitant une auge.

12. Station de support selon la revendication 11, **caractérisée en ce que** les patins (100) sont allongés et sont disposés perpendiculairement au plan de l'auge.

13. Station de support selon la revendication 11, **caractérisée en ce que** les patins (14) sont disposés dans le plan de l'auge.

14. Station de support selon l'une quelconque des revendications précédentes, **caractérisée en ce que** les clavettes (40) sont disposées aux extrémités du patin (14) et les goupilles (42) sont disposées entre les deux clavettes (40).

15. Station de support selon l'une quelconque des revendications précédentes, **caractérisée en ce que**, pour au moins un patin (101), les goupilles (42) sont disposées aux extrémités des patins (101) et les clavettes (40) sont disposées entre les goupilles (42).

16. Station de support selon l'une quelconque des revendications précédentes, **caractérisée en ce que** le châssis (12) comporte au moins une lumière (80) dans laquelle est reçue une clavette (40).

17. Station de support selon l'une quelconque des revendications précédentes, **caractérisée en ce qu'**elle comporte pour chaque patin (101) une semelle (102) de support du patin (101), la semelle (102) et le patin (101) comportant longitudinalement un guide (36) de même forme, la semelle (102) comportant en outre un profil complémentaire permettant, par complémentarité de formes, l'engagement du patin (101) sur la semelle (102).

18. Station de support selon la revendication 17, **caractérisée en ce que** le patin (101) comporte des tronçons disjoints successifs suivant la longueur de la semelle de support.

19. Convoyeur à bande comportant plusieurs stations de support selon l'une quelconque des revendications précédentes.

20. Convoyeur à bande selon la revendication 19 comportant plusieurs stations de support dont l'ensemble des patins présentent des guides identiques et sont retenues par des clavettes et des goupilles toutes identiques.

## Claims

1. Support station (10) for a belt conveyor comprising:
• a mounting (12), at least one slide block (14; 101) delimiting a support face of the belt, wherein the or each block is supported by the mounting;
• means for fastening the or each block (14; 101) on the mounting (12),
**characterised in that** the fastening means comprise a guide (36) integral to the block (14; 101), a key (40) engaged in the guide (36) and cooperating with the mounting (12) to immobilise the block (14; 101) in at least one direction and a pin (42) engaged on the guide (36) and cooperating with the key (40) to arrest the key (40) along the length of the guide (36) in at least one direction.

2. Support station according to claim 1, **characterised in that** the pin (42) forms a stop of the key (40) immobilised in the guide (36).

3. Support station according to claim 1 or 2, **characterised in that** the guide comprises a longitudinal groove (36) arranged on a face of the block (14).

4. Support station according to claim 3, **characterised in that** the groove (36) is dovetail-shaped in cross-section.

5. Support station according to any one of the preceding claims, **characterised in that** the pin (42) is formed from an elastically deformable pin.

6. Support station according to claim 5, **characterised in that** the pin has two articulated arms (50), which have two projecting areas (58) forming gripping zones.

7. Support station according to claim 5 or 6, **characterised in that** the pin (42) comprises anchoring hooks (54) and the guide (36) comprises seats (56) to receive the anchoring hooks (54) of the pin.

8. Support station according to any one of the preceding claims, **characterised in that** the key (40) comprises a body (44) for guidance in the guide and a projecting coupling lug (46).

9. Support station according to claim 8, **characterised in that** the coupling lug (46) of the key (40) is cross-shaped.

10. Support station **characterised in that** the mounting (12) comprises recesses (22, 24) arranged on both sides of the block (14), and that a key (40) projects axially on both sides of each block (14), wherein these keys (40) are received in the recesses (22, 24).

11. Support station according to any one of the preceding claims, **characterised in that** it comprises multiple blocks (14, 101) arranged side by side delimiting a trough.

12. Support station according to claim 11, **characterised in that** the blocks (100) are elongated and are arranged perpendicularly to the plane of the trough.

13. Support station according to claim 11, **characterised in that** the blocks (14) are arranged in the plane of the trough.

14. Support station according to any one of the preceding claims, **characterised in that** the keys (40) are arranged at the ends of the block (14) and the pins (42) are arranged between the two keys (40).

15. Support station according to any one of the preceding claims, **characterised in that** in the case of at least one block (101), the pins (42) are arranged at the ends of the blocks (101) and the keys (40) are arranged between the pins (42).

16. Support station according to any one of the preceding claims, **characterised in that** the mounting (12) comprises at least one slot (80), in which a key (40) is received.

17. Support station according to any one of the preceding claims, **characterised in that** for each block (101) it comprises a support plate (102) of the block (101), wherein longitudinally the plate (102) and the block (101) comprise a guide (36) of the same shape and the plate (102) additionally has a complementary profile, which because of the complementary shapes allows the block (101) to engage onto the plate (102).

18. Support station according to claim 17, **characterized in that** the block (101) comprises successive disconnected sections along the length of the support plate.

19. Belt conveyor comprising multiple support stations according to any one of the preceding claims.

20. Belt conveyor according to claim 19 comprising multiple support stations, wherein all the blocks have identical guides and are held by the keys and pins that are all identical.

## Patentansprüche

1. Tragstation (10) für ein Förderband, die umfasst:
- einen Rahmen (12) und wenigstens einen Gleitschuh (14; 101), der eine Abstützoberfläche des Bandes begrenzt, wobei der oder jeder Schuh durch den Rahmen getragen wird;
- Mittel zum Befestigen des oder jedes Schuhs (14; 101) an dem Rahmen (12),
**dadurch gekennzeichnet, dass** die Befestigungsmittel eine mit dem Schuh (14; 101) fest verbundene Führtmg (36), einen Keil (40), der mit der Führung (36) in Eingriff ist und mit dem Rahmen (12) zusammenwirkt, um den Schuh (14; 101) wenigstens in einer Richtung unbeweglich zu machen, und einen Zapfen (42), der an der Führung (36) in Eingriff ist und mit dem Keil (40) zusammenwirkt, um den Keil (40) in Richtung der Länge der Führung (36) wenigstens in einem Richtungssinn zu arretieren, aufweisen.

2. Tragstation nach Anspruch 1, **dadurch gekennzeichnet, dass** der Zapfen (42) einen harten Anschlag für den Keil (40), der in der Führung (36) unbeweglich gemacht wird, bildet.

3. Tragstation nach Anspruch 1 oder 2, **dadurch gekennzeichnet, dass** die Führung eine longitudinale Rinne (36) aufweist die in einer Oberfläche des Schuhes (14) ausgespart ist.

4. Tragstation nach Anspruch 3, **dadurch gekennzeichnet, dass** die Rinne (36) im Schnitt schwalbenschwanzförmig ist.

5. Tragstation nach einem der vorhergehenden Ansprüche, **dadurch gekennzeichnet, dass** der Zapfen (42) aus einer elastisch verformbaren Nadel gebildet ist.

6. Tragstation nach Anspruch 5, **dadurch gekennzeichnet, dass** der Zapfen zwei angelenkte Schenkel (50) aufweist, die zwei vorstehende Bereiche (58) aufweisen, die Greifzonen bilden.

7. Tragstation nach Anspruch 5 oder 6, **dadurch gekennzeichnet, dass** der Zapfen (42) Verankerungshaken (54) aufweist und die führung (36) Aufnahmesitze (56) für die Verankerungshaken (54) des Zapfens enthält.

8. Tragstation nach einem der vorhergehenden Ansprüche, **dadurch gekennzeichnet, dass** der Keil (40) einen Führungskörper (44) in der Führung und eine vorstehende Mitnehmernase (46) aufweist.

9. Tragstation nach Anspruch 8, **dadurch gekennzeichnet, dass** die Mitnehmernase (46) des Keils (40) eine Hakenform aufweist.

10. Tragstation, **dadurch gekennzeichnet, dass** der Rahmen (12) Nuten (22, 24) aufweist, die beiderseits des Schuhs (14) angeordnet sind, und dass beiderseits des Schuhs (14) ein Keil (40) axial vorsteht, wobei diese Keile (40) in den Nuten (22, 24) aufgenommen sind.

11. Tragstation nach einem der vorhergehenden Ansprüche, **dadurch gekennzeichnet, dass** sie mehrere Schuhe (14; 101) aufweist, die nebeneinander angeordnet sind und eine Mulde begrenzen.

12. Tragstation nach Anspruch 11, **dadurch gekennzeichnet, dass** die Schube (100) lang gestreckt sind und senkrecht zu der Ebene der Mulde angeordnet sind.

13. Tragstation nach Anspruch 11, **dadurch gekennzeichnet, dass** die Schuhe (14) in der Ebene der Mulde angeordnet sind.

14. Tragstation nach einem der vorhergehenden Ansprüche, **dadurch gekennzeichnet, dass** die Keile (40) an den Enden des Schuhs (4) angeordnet. sind und die Zapfen (42) zwischen den zwei Keilen (40) artgeordnet sind.

15. Tragstation nach einem der vorhergehenden Ansprüche, **dadurch gekennzeichnet, dass** für wenigstens einen Schuh (101) die Zapfen (42) an den Enden der Schuhe (101) angeordnet sind und die Keile (40) zwischen den Zapfen (42) angeordnet sind.

16. Tragstation nach einem der vorhergehenden Ansprüche, **dadurch gekennzeichnet, dass** der Rahmen (12) wenigstens ein Langloch (80) aufweist, in dem ein Keil (40) aufgenommen ist.

17. Tragstation nach einem der vorhergehenden Ansprüche, **dadurch gekennzeichnet, dass** sie für jeden Schuh (101) eine Sohle (102) zum Tragen des Schuhs (101) aufweist, wobei die Sohle (102) und der Schuh (101) in Längsrichtung eine Führung (36) mit derselben Form aufweisen, wobei die Sohle (102) außerdem ein komplementäres Profil aufweist, das durch Formenkomplementarität den Eingriff des Schuhs (101) an der Sohle (102) ermöglicht.

18. Tragstation nach Anspruch 17, **dadurch gekennzeichnet, dass** der Schuh (101) voneinander getrennte Teilstücke aufweist, die in Längsrichtung der Tragsohle aufeinander folgen.

19. Förderband, das mehrere Tragstationen nach einem der vorhergehenden Ansprüche umfasst.

20. Förderband nach Anspruch 19, das mehrere Tragstationen umfasst, wovon sämtliche Schuhe gleiche Führungen aufweisen und durch Keile und Zapfen, die alle gleich sind, gehalten werden.
